# EUROPEAN PATENT SPECIFICATION

(11) **EP 1 092 735 B1**
(45) Date of publication and mention of the grant of the patent: **16.11.2011**
(21) Application number: 00304407.0
(22) Date of filing: 24.05.2000
(51) Int. Cl.: C08F 236/06, C08C 19/44, C08F 4/54, C08F 4/64, C08F 4/70

(54) **Process for manufacturing high 1,4-CIS polybutadiene containing hydroxyl groups at ends thereof using molecular oxygen**
Verfahren zur Herstellung von Hydroxyl-Endgruppen enthaltenden 1,4-cis Polybutadien mit molekularem Sauerstoff
Procédé de fabrication du 1,4-cis polybutadiène contenant des groupements hydroxyls en fin de chaine par utilisation d'oxygène moléculaire

(30) Priority: 13.10.1999 KR 9944233
(43) Date of publication of application: 18.04.2001
(73) Proprietor: Korea Kumho Petrochemical Co. Ltd., Seoul 110-110 (KR)
(72) Inventor: Kwag, Gwang Hoon, Yusung-ku, Taejon-city 305-390 (KR); Lee, Seung Hwon, Taejon-city 305-395 (KR); Kim, A Ju, Yusung-ku, Taejon-city 305-345 (KR); Jang, Young Chan, Yusung-ku, Taejon-city 305-390 (KR); Lee, Seung Hwon, Yusung-ku, Taejon-city 305-345 (KR)
(74) Representative: Nash, David Allan

(56) References cited:
- EP-A- 0 093 075
- EP-A- 0 770 631
- EP-A- 0 920 886
- GB-A- 1 008 606
- US-A- 5 708 092

## Description

### Field of the Invention

This invention relates to a process for manufacturing high 1,4-cis polybutadiene containing hydroxyl groups at ends thereof using molecular oxygen and more particularly, to the process for manufacturing high 1,4-cis polybutadiene containing hydroxyl groups at ends thereof using molecular oxygen, wherein it comprises the steps of:
- polymerizing 1,3-butadiene monomer and butadiene derivatives in the presence of a nonpolar solvent using a transition metal Ziegler-Natta catalyst or a rare earth metal Ziegler-Natta catalyst as a polymerization catalyst to prepare 1,4-cis polybutadiene having high 1,4-cis content of 92%; and,
- introducing hydroxyl groups at the ends of polybutadiene using molecular oxygen as a modifier.

### Description of the Related Art

There are several conventional methods to produce high 1,4-cis polybutadiene using titanium catalyst (TiX₄/AlEt₃; wherein, X is Cl, Br or I), cobalt catalyst (Co(carboxylate)₂/AlEt₂Cl; Co(carboxylate)₂/MAO/halide; Co(carboxylate)₂/non-coordinative boron anionic compound/organometallic compound) or a transition metal Ziegler-Natta catalyst such as nickel catalyst (Ni(carboxylate)₂/AlEt₃/BF₃-OEt₂) [Belgium Pat. Nos. 551851 and 573680, Japanese Pat. Sho 40-21265, Sho 49-18635, Pyung 4-122709, Pyung 10-36418, Pyung 10-182726 and Sho 37-8198]. Another methods of using a rare earth metal Ziegler-Natta catalyst system from lanthanum (La) to lutetium (Lu) have been disclosed [U.S. Pat. No. 4,906,706 and Europe Pat. 713, 886].

In recent years, a novel method designed to modify the terminal groups of 1,4-cis polybutadiene has been intensively studied so as to further expand the application scope of a high 1,4-cis polybutadiene. More specifically, the novel method comprises the step of preparing high 1,4-cis polybutadiene using a rare earth metal Ziegler-Natta catalyst; then, the ends of such polybutadiene are modified using epoxy as an organic compound or tin halide as an inorganic compound [U.S. Pat. No. 4,906,706 and Europe Pat. 713, 886].

However, in case where the ends of 1,4-cis polybutadiene are modified using such organic or inorganic compound, the manufacturing process becomes more complicated and environment-unfriendly due to the fact that unreacted organic or inorganic compound should be separately removed after modification.

David R. Burfield Polymer, 1984, k225, 1817-1822 describes the preparation of functionally terminated polyethylene and polypropylene polymers by polymerising ethylene or propylene with a Ziegler-Natta catalyst TiCl₃, having AlCl₃ as a co-catalyst. No Ziegler-Natta catalysts based on any other metals are known that could be reacted with molecular oxygen to form a polymer terminally modified by a hydroxyl group.

### SUMMARY OF THE INVENTION

To comply with this matter, the inventor et al. have intensively studied to disclose an environment-friendly, unreactive, unremaining modifier which can modify all ends of high 1,4-cis polybutadiene, so formed via a transition metal and a rare earth metal Ziegler-Natta catalyst system. Thus this invention has been completed with a notion that high 1,4-cis polybutadiene containing hydroxyl groups at ends thereof using molecular oxygen can be prepared via the following two steps:
- polymerizing 1,3-butadiene monomer and butadiene derivatives in the presence of a nonpolar solvent using a transition metal Ziegler-Natta catalyst or a rare earth metal Ziegler-Natta catalyst as a polymerization catalyst to prepare 1,4-cis polybutadiene having high 1,4-cis content of 92%; and,
- introducing hydroxyl groups at the ends of polybutadiene using molecular oxygen as a modifier. The Ziegle-Natta catalyst is selected from a cobalt-based system, a nickel-based system and a neodymium-based system.

Therefore this invention provides an environment-friendly, unreactive, unremaining modifier which can modify all ends of high 1,4-cis polybutadiene, so formed via transition metal and rare earth metal Ziegler-Natta catalyst system.

This invention also provides a process for manufacturing high 1,4-cis polybutadiene containing hydroxyl groups at ends thereof using the modifier.

### Brief Description of the Drawings

Fig. 1 is an analytical result of high 1,4-cis polybutadiene containing hydroxyl groups at ends thereof, so prepared from Example 1 of this invention.

### Detailed Description of the Invention

To achieve the above object, this invention is characterized by a process for manufacturing high 1,4-cis polybutadiene containing hydroxyl groups at the ends of polybutadiene, wherein it comprises the steps of :
- polymerizing 1,3-butadiene monomer and butadiene derivatives in the presence of a nonpolar solvent using a transition metal Ziegler-Natta catalyst or a rare earth metal Ziegler-Natta catalyst as a polymerization catalyst to prepare 1,4-cis polybutadiene having high 1,4-cis content of 92%; and,
- introducing hydroxyl groups at the ends of polybutadiene using molecular oxygen as a modifier.

This invention is explained in more detail as set forth hereunder.

This invention relates to a process for manufacturing high 1,4-cis polybutadiene containing hydroxyl groups at ends thereof using molecular oxygen, wherein it comprises the steps of:
- polymerizing 1,3-butadiene monomer and butadiene derivatives in the presence of a nonpolar solvent using a transition metal Ziegler-Natta catalyst or a rare earth metal Ziegler-Natta catalyst as a polymerization catalyst to prepare 1,4-cis polybutadiene having high 1,4-cis content of 92%; and,
- introducing hydroxyl groups at the ends of polybutadiene using molecular oxygen as a modifier; wherein the Ziegler-Natta catalyst is selected from a cobalt-based system, a nickel-based system and a neodymium-based system.

In line with the process for manufacturing high 1,4-cis polybutadiene containing hydroxyl groups at ends thereof, the catalysts used herein are explained in more detail as follows:

A cobalt catalyst comprises cobalt salt, organoaluminum chloride and a small amount of water. It is preferred that the cobalt salt has some carboxyl-group compounds with a high solubility to a nonpolar solvent as ligand. Said carboxylate, such as octoate, naphthenate, versatate and stearate, has 8 to 20 carbon atoms in a saturated, unsaturated, cyclic or linear form. The detailed examples of cobalt carboxylate include cobalt octoate, cobalt versatate and cobalt naphthenate. The typical organoaluminum chloride compound is a compound expressed by AlXₙR²₃₋ₙ (wherein R² is an alkyl group of 1 to 10 carbon atoms); among the organoaluminum chloride compounds, diethylaluminum chloride(AlEt₂Cl) is the most preferred.

A nickel catalyst comprises nickel salt, organoaluminum and fluorinated compound. It is preferred that the nickel salt has some carboxyl-group compounds with a high solubility to a nonpolar solvent as ligand. Said carboxylate, such as octoate, naphthenate, versatate and stearate, has 8 to 20 carbon atoms in a saturated, unsaturated, cyclic or linear form. The detailed examples of nickel carboxylate include nickel octoate(Ni(2-ethylhexanoate)₂) and nickel naphthenate. The examples of fluorinated compound include boron trifluoride ether or hydrogen fluoride ether. The detailed examples of ether compound include dimethylether, diethylether, dibuthylether, tetrahydrofuran, dihexylether, dioctylether or methyl-t-butylether.

The organoaluminum compound is a compound expressed by AlR³₃ (wherein R³ is an alkyl group and an aryl group of 1 to 10 carbon atoms or a hydrogen atom). The detailed examples of such organoaluminum compound include trimethylaluminum, triethylaluminum, tripropylaluminum, tributylaluminum, triisobutylaluminum, trihexylaluminum and diisobutylaluminum hydride.

A neodymium catalyst, a typical catalyst of rare earth metal Ziegler-Natta catalyst, comprises neodymium salt, halide and organoaluminum. Carboxylate is suitable as the neodymium salt. According to this invention, said carboxylate, such as octoate, naphthenate, versatate and stearate, has 8 to 20 carbon atoms in a saturated, unsaturated, cyclic or linear form. The detailed examples of rare earth carboxylate includes neodymium versatate (Nd(versatate)₃, NdH(versatate)₄), neodymium octoate and neodymium naphthenate.

In addition, the examples of halogenated compounds include Lewis acid containing halogen and organic halide which can easily provide halogen. According to this invention, it is preferred that Lewis acid containing halogen is selected from the group consisting of an aluminum compound expressed by AlXₙR¹₃₋ₙ (wherein R¹ is an alkyl group and an aryl group of 1 to 10 carbon atoms or a hydrogen atom) and boron, silicone, tin and titanium can be also substituted for aluminum of said corresponding compounds. Further, t-alkyl halide such as t-butyl halogen is preferred as organic halide.

It is preferred that the organoaluminum compound is a compound expressed by AlR⁴₃ (wherein R⁴ is an alkyl group and an aryl group of 1 to 10 carbon atoms or a hydrogen atom). The detailed examples of the organoaluminum compound include trimethylaluminum, triethylaluminum, tripropylaluminum, tributylaluminum, triisobutylaluminum, trihexylaluminum and diisobutylaluminum hydride.

In order to improve the leaving properties of the rare earth catalyst system, organic amine and organic phosphorus can be employed as Lewis base. The detailed examples of such compound include tetramethylethylenediamine, triethylamine, triphenyl phosphine, tributyl phosphine and tetrahydrofuran.

In accordance with this invention, some nonpolar solvents against the catalysts can be employed. The types of nonpolar solvents are not specifically restricted. The nonpolar solvent used includes one solvent selected from the group consisting of pentane, hexane, isopentane, heptane, octane, isooctane, cyclopentane, methylcyclopentane, cyclohexane, methylcyclohexane, ethylcyclohexane, benzene, toluene, ethylbenzene and xylene.

The process for preparing high 1,4-cis polybutadiene using the catalysts is made available in such a manner that 1,3-butadiene monomer or butadiene derivatives is under solution polymerization using a nonpolar solvent in the presence of catalysts. Meantime, a solvent during polymerization should be employed in the state where oxygen and water are removed. According to this invention, it is preferred to use the same nonpolar solvent as that of catalysts.

The types of 1,3-butadiene monomer or butadiene derivatives used for this invention is not specifically restricted. Such compound used include one or more of the compounds selected from the group consisting of 1,3-butadiene, isoprene, 1,3-pentadiene, 2,3-dimethyl-1,3-butadiene, myrcene and derivatives thereof.

The polymerization is performed under a high-purity nitrogen atmosphere, preferably at the reaction temperature of -20~100°C. Under appropriate catalyst conditions, it is preferred that the polymerization is conducted for 30 minutes to 3 hours during which a final product can be prepared with a yield of more than 70%.

Polybutadiene, so prepared via the above processes, is high 1,4-cis polybutadiene having cis-content of more than 92% and molecular weight of 10,000~2,000,000.

According to this invention, an additional reaction of high 1,4-cis polybutadiene, a final product is conducted so as to modify the ends of polybutadiene by using molecular oxygen. The reaction process is conducted by blowing a compressed air into a reactor for 1 minute to 2 hours, followed by the addition of alcohol or steam to terminate the reaction. Through the above reaction, high 1,4-cis polybutadiene containing hydroxyl groups at ends thereof can be obtained.

The hydroxyl groups of polymer, so formed, can be observed by an infrared spectrometer and nuclear magnetic resonance spectrometer.

This invention is explained in more detail based on the following Examples but is not limited by these Examples.

### Example 1

The Ziegler-Natta catalysts used for the reaction comprised neodymium versatate (1.0% cyclohexane solution), diethylaluminum chloride and diisobutylaluminum hydide(DIBAL) (15% n-hexane solution); the molar ratio of Nd/Cl/DIBAL was 1:3:30; neodymium catalyst of 1.0 X 10⁻³ mol was employed per 100g of monomer. The amount of solvent was predetermined up to 5 times greater than that of monomer.

After nitrogen was sufficiently blown into a 400ml pressure glass reactor, to the reactor butadiene (30g) as monomer, diethylaluminum chloride, diidobutylaluminum hydride and cyclohexane (150g) as a solvent were added in accordance with the following table 1. The mixture was under aging process at 40°C for 30 minutes and with the addition of neodymium versatate, the reaction was further conducted for 30 minutes.

Diisobutylaluminum hydride (5.0 X 10⁻³ mol) was added to said product and then, the reaction was further conducted for 10 minutes. After compressed air was blown into the reactor for 2 hours and with the addition of methylalcohol, the reaction was completed. The hydroxyl groups of polymer, so formed, were observed using an infrared spectrometer and nuclear magnetic resonance spectrometer (Fig. 1).

### Example 2

The Ziegler-Natta catalysts used for the reaction comprised neodymium versatate (1.0% cyclohexane solution), diethylaluminum chloride (AlEt₂Cl) and diisobutylaluminum hydride (15% n-hexane solution); the molar ratio of Nd/Cl/DIBAL was 1:3:30; neodymium catalyst of 1.0 X 10⁻³ mol was employed per 100g of monomer.

After nitrogen was sufficiently blown into a 400ml pressure glass reactor, to the reactor butadiene (30g) as monomer, diethylaluminum chloride and diisobutylaluminum hydride and cyclohexane (150g) as a solvent were added in accordance with the following table 1. The mixture was under aging process at 40°C for 30 minutes and with the addition of neodymium versatate, the reaction was further conducted for 30 minutes.

Diethyl zinc (5.0 X 10⁻³ mol) was added to said product and then, the reaction was further conducted for 10 minutes. After compressed air was blown into the reactor for 2 hours and with the addition of methylalcohol, the reaction was completed. Some portions of polymer, so formed, were dissolved in dichloromethane and its hydroxyl groups were observed using an infrared spectrometer and nuclear magnetic resonance spectrometer.

### Example 3

The Ziegler-Natta catalysts used for the reaction comprised neodymium versatate (1.0% cyclohexane solution), diethylaluminum chloride (AlEt₂Cl) and diisobutylaluminum hydride (15% n-hexane solution); the molar ratio of Nd/Cl/DIBAL was 1:3:30; neodymium catalyst of 1.0 X 10⁻³ mol was employed per 100g of monomer.

After nitrogen was sufficiently blown into a 400ml pressure glass reactor, to the reactor butadiene (30g) as monomer, diethylaluminum chloride and diisobutylaluminum hydride and cyclohexane (150g) as a solvent were added in accordance with the following table 1. The mixture was under aging process at 40°C for 30 minutes and with the addition of neodymium versatate, the reaction was further conducted for 10 minutes. After compressed air was blown into the reactor for 2 hours and with the addition of methylalcohol, the reaction was completed. Some portions of polymer, so formed, were dissolved in dichloromethane and its hydroxyl groups were observed using an infrared spectrometer.

### Example 4

The Ziegler-Natta catalysts used for the reaction comprised nickel octoate (0.05% toluene solution), boron trifluoride diethylether complex (1.5% toluene solution) and triethylaluminum (0.8% toluene solution); nickel catalyst of 1.0 X 10⁻³ mol was employed per 100g of monomer. The molar ratio of Ni/B/Al was 1:12:6.

The polymerization of each monomer was conducted as follows:

After nitrogen was sufficiently blown into a 400ml pressure reactor, the catalyst, so aged, and butadiene as a monomer were added to the reactor in the predetermined amounts, together with a solvent (weight of solvent/weight of monomer = 5) in the mixing weight ratio of cyclohexane : heptane as 9:1. The mixture was reacted at 40°C for 10 minutes and then, oxygen was blown into the reactor for 10 minutes.

Some portions of polymer, so formed, were dissolved in dichloromethane and its hydroxyl groups were observed using an infrared spectrometer.

Meantime, as for each final product with high 1,4-cis polybutadiene containing hydroxyl groups at ends thereof, so prepared from Examples 1-4, such items as yield, cis content, weight-average molecular weight and distribution of molecular weight were measured, as shown in the following table 2.

**Table 1.**

| Example | Catalyst composition | Nd concentration (mol) | Molar ratio (Nd/Cl/Al) | Terminal modifier |
|---|---|---|---|---|
| 1 | Neodymium versatate/diethylalutninum | 1.0 X 10⁻³ | 1:3:30 | DIBAL/O₂ |
| | chloride/DIBAL^{(a)} | | | |
| 2 | Neodymium versatate/diethylaluminum | 1.0 X 10⁻³ | 1:3:30 | ZnF-t₂/O₂ |
| | chloride/DIBAL | | | |
| 3 | Neodymium versatateldiethylaluminum | 1.0 X 10-) | 1:3:30 | O₂ |
| | chloride/DIBAL | | | |
| 4 | Nickel octoate/boron trifluoride | 1.0 X 10⁻³ | 1:12:6 | O₂ |
| | diethylether^{(b)} /triethylalumnium | | | |
| (a) | DIBAL: Diisobutylaluminum hydride (Al(iBu)₂H) | | | |
| (b) | Boron trifluoride diethylether = BF₃-OEt₂ | | | |

**Table 2.**

| Example | Reaction time | Temp. | Yield | Cis content | Mw* | MWD** | IR |
|---|---|---|---|---|---|---|---|
| | (min) | (°C) | (%) | (%) | (X 10⁻⁴) | | (3500 cm⁻¹) |
| 1 | 40 | 40 | 84 | 96 | 3.90 | 3.74 | Observed |
| 2 | 40 | 40 | 76 | 95 | 6.94 | 5.40 | Observed |
| 3 | 30 | 40 | 79 | 96 | 2.95 | 2.98 | Observed |
| 4 | 10 | 40 | 65 | 94 | 1.97 | 4.49 | Observed |
| *Mw: weight-average molecular weight | | | | | | | |
| **MWD: Distribution of molecular weight | | | | | | | |

As mentioned above, the process for manufacturing high 1,4-cis polybutadiene containing hydroxyl groups at ends thereof using molecular oxygen of this invention has the following advantages in that (1) the application scope of high 1,4-cis polybutadiene can be further widened, and that (2), unlike the conventional method to employ organic or inorganic compound, the use of molecular oxygen as a modifier can ensure any unreacted modifier not to remain in rubber products, and that (3) inexpensive air can be used as the raw material of molecular oxygen.

## Claims

1. A process for manufacturing high 1,4-cis polybutadiene containing hydroxyl groups at ends thereof using molecular oxygen, wherein it comprises the steps of:
polymerizing 1,3-butadiene monomer and butadiene derivatives in the presence of a nonpolar solvent using a transition metal Ziegler-Natta catalyst or a rare earth metal Ziegler-Natta catalyst to prepare polybutadiene having high 1,4-cis content of at least 92%; and,
introducing hydroxyl groups at the ends of polybutadiene using molecular oxygen as a modifier;
wherein said transition metal Ziegler-Natta catalyst is a cobalt catalyst consisting of cobalt salt, organoaluminum chloride and water.

2. The process for manufacturing hydroxyl high 1,4-cis polybutadiene according to claim 1, wherein said cobalt salt is a carboxylate of 8 to 20 carbon atoms in a saturated, unsaturated, cyclic or linear form.

3. The process for manufacturing hydroxyl high 1,4-cis polybutadiene according to claim 2, wherein said carboxylate is cobalt octoate, cobalt versatate or cobalt naphthenate.

4. The process for manufacturing hydroxyl high 1,4-cis polybutadiene according to claim 1, wherein said organoaluminum chloride is a compound expressed by ALXₙR²₃₋ₙ (wherein R² is an alkyl group of 1 to 10 carbon atoms.

5. The process for manufacturing hydroxyl high 1,4-cis polybutadiene according to claim 4, wherein said organoaluminum chloride is diemylaliiminum chloride.

6. A process for manufacturing high 1,4-cis polybutadiene containing hydroxyl groups at ends thereof using molecular oxygen, wherein it comprises the steps of:
polymerizing 1,3-butadiene monomer and butadiene derivatives in the presence of a nonpolar solvent using a transition metal Ziegler-Natta catalyst or a rare earth metal Ziegler-Natta catalyst to prepare polybutadiene having high 1,4-cis content of at least 92%; and,
introducing hydroxyl groups at the ends of polybutadiene using molecular oxygen as a modifier;
wherein said transition metal Ziegler-Natta catalyst is a nickel catalyst consisting of nickel salt, organoaluminum and fluorinated compound.

7. The process for manufacturing hydroxyl high 1,4-cis polybutadiene according to claim 6, wherein said nickel salt is a carboxylate of 8 to 20 carbon atoms in a saturated, unsaturated, cyclic or linear form.

8. The process for manufacturing hydrbxyl high 1,4-cis polybutadiene according to claim 7, wherein said carboxylate is nickel octoate, nickel versatate or nickel naphthenate.

9. The process for manufacturing hydroxyl high 1,4-cis polybutadiene according to claim 6, wherein said fluorinated compound is boron trifluoride ether or hydrogen fluoride ether.

10. The process for manufacturing hydroxyl high 1,4-cis polybutadiene according to claim 9, wherein said ether compound is dimethylether, diethylether, dibuthylether, tetrahydrofuran, dihexylether, dioctylether or methyl-t-butyl ether.

11. The process for manufacturing hydroxyl high 1,4-cis polybutadiene according to claim 6, wherein said organoaluminum is a compound expressed by AIR³₃ (wherein R³ is an alkyl group and an aryl group of 1 to 10 carbon atoms or a hydrogen atom).

12. The process for manufacturing hydroxyl high 1,4-cis polybutadiene according to claim 11, wherein said organoaluminum is trimethylaluminum, triethylaluminum, tripropylaluminum, tributylaluminum, triisobutylaluminum, trihexylaluminum or diisobutylaluminum hydride.

13. A process for manufacturing high 1,4-cis polybutadiene containing hydroxyl groups at ends thereof using molecular oxygen, wherein it comprises the steps of:
polymerizing 1,3-butadiene monomer and butadiene derivatives in the presence of a nonpolar solvent using a transition metal Ziegler-Natta catalyst or a rare earth metal Ziegler-Natta catalyst to prepare polybutadiene having high 1,4-cis content of at least 92%; and,
introducing hydroxyl groups at the ends of polybutadiene using molecular oxygen as a modifier;
wherein said rare earth metal Ziegler-Natta catalyst is a neodymium catalyst consisting of neodymium salt, halide and organoaluminum.

14. The process for manufacturing hydroxyl high 1,4-cis polybutadiene according to claim 13, wherein said neodymium salt is a carboxylate of 8 to 20 carbon atoms in a saturated, unsaturated, cyclic or linear form.

15. The process for manufacturing hydroxyl high 1,4-cis polybutadiene according to claim 14, wherein carboxylate is neodymium versatate, neodymium octoate or neodymium naphthenate.

16. The process for manufacturing hydroxyl high 1,4-cis polybutadiene according to claim 13, wherein said halide is Lewis acid or organic halide containing halogen.

17. The process for manufacturing hydroxyl high 1,4-cis polybutadiene according to claim 16, wherein said Lewis acid containing halogen is aluminum halide expressed by AIXₙR¹₃₋ₙ (wherein R¹ is an alkyl group and an aryl group of 1 to 10 carbon atoms or a hydrogen atom) or inorganic halide containing boron, silicone, tin or titanium instead of aluminum of said aluminum halide.

18. The process for manufacturing hydroxyl high 1,4-cis polybutadiene according to claim 16, wherein said organic halide is t-alkyl halide.

19. The process for manufacturing hydroxyl high 1,4-cis polybutadiene according to claim 13, wherein said organoaluminum compound is a compound expressed by AlR⁴₃ (wherein R⁴ is an alkyl group and an aryl group of 1 to 10 carbon atoms or a hydrogen atom).

20. The process for manufacturing hydroxyl high 1,4-cis polybutadiene according to claim 19, wherein organoaluminum compound is trimethylaluminum, triethylaluminum, tripropylaluminum, tributylaluminum, triisobutylaluminum, trihexylaluminum or diisobutylaluminum hydride.

21. The process for manufacturing hydroxyl high 1,4-cis polybutadiene according to any one of claims 1, 6 and 13, wherein 1,3-butadiene monomer or butadiene derivatives comprises one or more of the compounds selected from the group consisting of 1,3-butadiene, isoprene, 1,3-pentadiene, 2,3-dimethyl-1,3-butadiene, myrcene or derivatives thereof.

22. The process for manufacturing hydroxyl high 1,4-cis polybutadiene according to any one of claims 1, 6 and 13, said nonpolar solvent comprises one or more of the compounds selected from the group consisting of pentane, hexane, isopentane, heptane, octane, isooctane, cyclopentane, methylcyclopentane, cyclohexane, methylcyclohexane, ethylcyclohexane, benzene, toluene, ethylbenzene and xylene.

## Patentansprüche

1. Herstellungsverfahren für Polybutadien enthaltend Hydroxyl-Endgruppen und mit hohem 1,4-cis-Anteil, unter Verwendung von molekularem Sauerstoff, umfassend die Schritte
Polymierisieren von 1,3-Butadienmonomer und Butadien-Derivaten in Anwesenheit eines nichtpolaren Lösungsmittels mit einem Übergangsmetall-Ziegler-Natta-Katalysator oder einem Seltenerdmetall-Ziegler-Natta-Katalysator zur Herstellung von Polybutadien mit hohem 1,4-cis-Gehalt von mindestens 92%; und,
Einführen von Hydroxylgruppen an den Enden des Polybutadiens mit molekularem Sauerstoff als Modifizierer;
wobei der Übergangsmetall-Ziegler-Natta-Katalysator ein Cobaltkatalysator ist, bestehend aus Cobaltsalz, Organoaluminiumchlorid und Wasser.

2. Herstellungsverfahren für Polybutadien enthaltend Hydroxyl-Endgruppen und mit hohem 1,4-cis-Anteil gemäß Anspruch 1, wobei das Cobaltsalz ein Carboxylat mit 8 bis 20 Kohlenstoffatomen ist in einer gesättigten, ungesättigten, ringförmigen oder linearen Form.

3. Herstellungsverfahren für Polybutadien enthaltend Hydroxyl-Endgruppen und mit hohem 1,4-cis-Anteil gemäß Anspruch 2, wobei das Carboxylat Cobaltoctoat, Cobaltversatat oder Cobaltnaphthenat ist.

4. Herstellungsverfahren für Polybutadien enthaltend Hydroxyl-Endgruppen und mit hohem 1,4-cis-Anteil gemäß Anspruch 1, wobei das Organoaluminiumchlorid eine Verbindung ist, dargestellt durch AIXₙR²₃₋ₙ, wobei R² eine Alkylgruppe mit 1 bis 10 Kohlenstoffatomen ist.

5. Herstellungsverfahren für Polybutadien enthaltend Hydroxyl-Endgruppen und mit hohem 1,4-cis-Anteil gemäß Anspruch 4, wobei das Organoaluminiumchlorid -Aluminiumchlorid Diemylaluminiumchlorid ist.

6. Herstellungsverfahren für Polybutadien enthaltend Hydroxyl-Endgruppen und mit hohem 1,4-cis-Anteil, unter Verwendung von molekularem Sauerstoff, umfassend die Schritte
Polymierisieren von 1,3-Butadienmonomer und Butadien-Derivaten in Anwesenheit eines nichtpolaren Lösungsmittels mit einem Übergangsmetall-Ziegler-Natta-Katalysator oder einem Seltenerdmetall-Ziegler-Natta-Katalysator zur Herstellung von Polybutadien mit hohem 1,4-cis-Gehalt von mindestens 92%; und,
Einführen von Hydroxylgruppen an den Enden des Polybutadiens mit molekularem Sauerstoff als Modifizierer;
wobei der Übergangsmetall-Ziegler-Natta-Katalysator ein Nickelkatalysator ist, bestehend aus Nickelsalz, Organoaluminium und einer fluorierten Verbindung.

7. Herstellungsverfahren für Polybutadien enthaltend Hydroxyl-Endgruppen und mit hohem 1,4-cis-Anteil gemäß Anspruch 6, wobei das Nickelsalz ein Carboxylat mit 8 bis 20 Kohlenstoffatomen ist in einer gesättigten, ungesättigten, ringförmigen oder linearen Form.

8. Herstellungsverfahren für Polybutadien enthaltend Hydroxyl-Endgruppen und mit hohem 1,4-cis-Anteil gemäß Anspruch 7, wobei das Carboxylat Nickeloctoat, Nickelversatat oder Nickelnaphthenat ist.

9. Herstellungsverfahren für Polybutadien enthaltend Hydroxyl-Endgruppen und mit hohem 1,4-cis-Anteil gemäß Anspruch 6, wobei die fluorierte Verbindung Bortrifluoridether oder Wasserstofffluoridether ist.

10. Herstellungsverfahren für Polybutadien enthaltend Hydroxyl-Endgruppen und mit hohem 1,4-cis-Anteil gemäß Anspruch 9, wobei die Etherverbindung Dimethylether, Diethyelether, Dibutylether, Tetrahydrofuran, Dihexylether, Dioctylether oder Methyl-t-butylether ist.

11. Herstellungsverfahren für Polybutadien enthaltend Hydroxyl-Endgruppen und mit hohem 1,4-cis-Anteil gemäß Anspruch 6, wobei das Organoaluminium eine Verbindung ist, dargestellt durch AIR³₃ (wobei R³ eine Alkylgruppe und eine Arylgruppe mit 1 bis 10 Kohlenstoffatomen oder ein Wasserstoffatom ist).

12. Herstellungsverfahren für Polybutadien enthaltend Hydroxyl-Endgruppen und mit hohem 1,4-cis-Anteil gemäß Anspruch 11, wobei das Organoaluminium Trimethylaluminium, Triethylaluminium, Tripropylaluminium, Tributylaluminium, Trüsobutylaluminium, Trihexylaluminium oder Düsobutylaluminiumhydrid ist.

13. Herstellungsverfahren für Polybutadien enthaltend Hydroxyl-Endgruppen und mit hohem 1,4-cis-Anteil, unter Verwendung von molekularem Sauerstoff, umfassend die Schritte
Polymierisieren von 1,3-Butadienmonomer und Butadien-Derivatenen in Anwesenheit eines nichtpolaren Lösungsmittels mit einem Übergangsmetall-Ziegler-Natta-Katalysator oder einem Seltenerden-Ziegler-Natta-Katalysator zur Herstellung von Polybutadien mit hohem 1,4-cis-Gehalt von mindestens 92%; und,
Einführen von Hydroxylgruppen an den Enden des Polybutadiens mit molekularem Sauerstoff als Modifizierer;
wobei der Seltenerden -Ziegler-Natta-Katalysator ein Neodymkatalysator ist, bestehend aus Neodymsalz, Halogenid und Organoaluminium.

14. Herstellungsverfahren für Polybutadien enthaltend Hydroxyl-Endgruppen und mit hohem 1,4-cis-Anteil gemäß Anspruch 13, wobei das Neodymsalz ein Carboxylat mit 8 bis 20 Kohlenstoffatomen ist in einer gesättigten, ungesättigten, ringförmigen oder linearen Form.

15. Herstellungsverfahren für Polybutadien enthaltend Hydroxyl-Endgruppen und mit hohem 1,4-cis-Anteil gemäß Anspruch 14, wobei das Caroxylat Neodymversatat, Neodymoctoat oder Neodymnaphthenat ist.

16. Herstellungsverfahren für Polybutadien enthaltend Hydroxyl-Endgruppen und mit hohem 1,4-cis-Anteil gemäß Anspruch 13, wobei das Halogenid eine halogenhaltige Lewis-Säure oder organisches Halogenid ist.

17. Herstellungsverfahren für Polybutadien enthaltend Hydroxyl-Endgruppen und mit hohem 1,4-cis-Anteil gemäß Anspruch 16, wobei die halogenhaltige Lewis-Säure Aluminiumhalogenid ist, dargestellt durch AIXₙR¹₃₋ₙ (wobei R¹ eine Alkylgruppe und eine Arylgruppe mit 1 bis 10 Kohlenstoffatomen oder ein Wasserstoffatom ist), oder ein anorganisches Halogenid, enthaltend Bor, Silicon, Zinn oder Titan anstelle des Aluminiums des Aluminiumhalogenids.

18. Herstellungsverfahren für Polybutadien enthaltend Hydroxyl-Endgruppen und mit hohem 1,4-cis-Anteil gemäß Anspruch 16, wobei das organische Halogenid ein t-Alkylhalogenid ist.

19. Herstellungsverfahren für Polybutadien enthaltend Hydroxyl-Endgruppen und mit hohem 1,4-cis-Anteil gemäß Anspruch 13, wobei die Organoaluminium-Verbindung eine Verbindung ist, dargestellt durch AIR⁴₃ (wobei R⁴ eine Alkylgruppe und eine Arylgruppe mit 1 bis 10 Kohlenstoffatomen oder ein Wasserstoffatom ist).

20. Herstellungsverfahren für Polybutadien enthaltend Hydroxyl-Endgruppen und mit hohem 1,4-cis-Anteil gemäß Anspruch 19, wobei die Organoaluminium-Verbindung Trimethylaluminium, Triethylaluminium, Tripropylaluminium, Tributylaluminium, Trüsobutylaluminium, Trihexylaluminium, oder Diisobutylaluminiumhydrid ist.

21. Herstellungsverfahren für Polybutadien enthaltend Hydroxyl-Endgruppen und mit hohem 1,4-cis-Anteil gemäß irgendeinem der Ansprüche 1, 6 und 13, wobei das 1,3-Butadienmonomer oder die Butadien-Derivate einen oder mehrere Verbindungen umfassen, ausgewählt aus der Gruppe 1,3-Butadien, Isopren, 1,3-Pentadien, 2,3-Dimethyl-1,3-butadien, Myrcen oder Derivate davon.

22. Herstellungsverfahren für Polybutadien enthaltend Hydroxyl-Endgruppen und mit hohem 1,4-cis-Anteil gemäß irgendeinem der Ansprüche 1, 6 und 13, wobei das nichtpolare Lösungsmittel umfasst eine oder mehr Verbindungen, ausgewählt aus der Gruppe Pentan, Hexan, Isopentan, Heptan, Octan, Isooctan, Cyclopentan, Methylcyclopentan, Cyclohexan, Methylcyclohexan, Ethylcyclohexan, Benzol, Toluol, Ethylbenzol und Xylol.

## Revendications

1. Un processus de fabrication de polybutadiène haut 1,4-cis contenant des groupes hydroxyles à des extrémités de celui-ci en utilisant de l'oxygène moléculaire, comprenant les opérations suivantes :
la polymérisation d'un monomère 1,3-butadiène et de dérivés de butadiène en présence d'un solvant non polaire en utilisant un catalyseur Ziegler-Natta à base de métal de transition ou un catalyseur Ziegler-Natta à base de métal de terres rares de façon à préparer un polybutadiène possédant une teneur 1,4-cis élevée d'au moins 92%, et,
l'introduction de groupes hydroxyles aux extrémités du polybutadiène en utilisant de l'oxygène moléculaire comme modificateur,
où ledit catalyseur Ziegler-Natta à base de métal de transition est un catalyseur à base de cobalt se composant de sel de cobalt, chlorure d'organoaluminium et eau.

2. Le processus de fabrication de polybutadiène haut 1,4-cis hydroxyle selon la revendication 1, où ledit sel de cobalt est un carboxylate de 8 à 20 atomes de carbone sous une forme saturée, non saturée, cyclique ou linéaire.

3. Le processus de fabrication de polybutadiène haut 1,4-cis hydroxyle selon la revendication 2, où ledit carboxylate est octoate de cobalt, versatate de cobalt ou naphthénate de cobalt.

4. Le processus de fabrication de polybutadiène haut 1,4-cis hydroxyle selon la revendication 1, où ledit chlorure d'organoaluminium est un composé exprimé par ALXₙR²₃₋ₙ (où R² est un groupe alkyle de 1 à 10 atomes de carbone.

5. Le processus de fabrication de polybutadiène haut 1,4-cis hydroxyle selon la revendication 4, où ledit chlorure d'organoaluminium est chlorure de diéthylaluminium.

6. Un processus de fabrication de polybutadiène haut 1,4-cis contenant des groupes hydroxyles à des extrémités de celui-ci en utilisant de l'oxygène moléculaire, comprenant les opérations suivantes :
la polymérisation d'un monomère 1,3-butadiène et de dérivés de butadiène en présence d'un solvant non polaire en utilisant un catalyseur Ziegler-Natta à base de métal de transition ou un catalyseur Ziegler-Natta à base de métal de terres rares de façon à préparer un polybutadiène possédant une teneur 1,4-cis élevée d'au moins 92%, et,
l'introduction de groupes hydroxyles aux extrémités du polybutadiène en utilisant de l'oxygène moléculaire comme modificateur,
où ledit catalyseur Ziegler-Natta à base de métal de transition est un catalyseur à base de nickel se composant de sel de nickel, organoaluminium et un composé fluoré.

7. Le processus de fabrication de polybutadiène haut 1,4-cis hydroxyle selon la revendication 6, où ledit sel de nickel est un carboxylate de 8 à 20 atomes de carbone sous une forme saturée, non saturée, cyclique ou linéaire.

8. Le processus de fabrication de polybutadiène haut 1,4-cis hydroxyle selon la revendication 7, où ledit carboxylate est octoate de nickel, versatate de nickel ou naphthénate de nickel.

9. Le processus de fabrication de polybutadiène haut 1,4-cis hydroxyle selon la revendication 6, où ledit composé fluoré est éther de trifluorure de bore ou éther de fluorure d'hydrogène.

10. Le processus de fabrication de polybutadiène haut 1,4-cis hydroxyle selon la revendication 9, où ledit composé d'éther est diméthyléther, diéthyléther, dibuthyléther, tétrahydrofurane, dihexyléther, dioctyléther ou méthyl-t-butyléther.

11. Le processus de fabrication de polybutadiène haut 1,4-cis hydroxyle selon la revendication 6, où ledit organoaluminium est un composé exprimé par AIR³₃ (où R³ est un groupe alkyle et un groupe aryle de 1 à 10 atomes de carbone ou un atome d'hydrogène).

12. Le processus de fabrication de polybutadiène haut 1,4-cis hydroxyle selon la revendication 11, où ledit organoaluminium est triméthylaluminium, triéthylaluminium, tripropylaluminium, tributylaluminium, triisobutylaluminium, trihexylaluminium ou hydrure de diisobutylaluminium.

13. Un processus de fabrication de polybutadiène haut 1,4-cis contenant des groupes hydroxyles à des extrémités de celui-ci en utilisant de l'oxygène moléculaire, comprenant les opérations suivantes :
la polymérisation d'un monomère 1,3-butadiène et de dérivés de butadiène en présence d'un solvant non polaire en utilisant un catalyseur Ziegler-Natta à base de métal de transition ou un catalyseur Ziegler-Natta à base de métal de terres rares de façon à préparer un polybutadiène possédant une teneur 1,4-cis élevée d'au moins 92%, et,
l'introduction de groupes hydroxyles aux extrémités du polybutadiène en utilisant de l'oxygène moléculaire comme modificateur,
où ledit catalyseur Ziegler-Natta à base de métal de terres rares est un catalyseur au néodyme se composant de sel de néodyme, halogénure et organoaluminium.

14. Le processus de fabrication de polybutadiène haut 1,4-cis hydroxyle selon la revendication 13, où ledit sel de néodyme est un carboxylate de 8 à 20 atomes de carbone sous une forme saturée, non saturée, cyclique ou linéaire.

15. Le processus de fabrication de polybutadiène haut 1,4-cis hydroxyle selon la revendication 14, où le carboxylate est versatate de néodyme, octoate de néodyme ou naphthénate de néodyme.

16. Le processus de fabrication de polybutadiène haut 1,4-cis hydroxyle selon la revendication 13, où ledit halogénure est un halogène contenant un acide de Lewis ou un halogénure organique.

17. Le processus de fabrication de polybutadiène haut 1,4-cis hydroxyle selon la revendication 16, où ledit halogène contenant un acide de Lewis est un halogénure d'aluminium exprimé par AIXₙR¹₃₋ₙ (où R¹ est un groupe alkyle et un groupe aryle de 1 à 10 atomes de carbone ou un atome d'hydrogène) ou un bore contenant un halogénure inorganique, du silicium, de l'étain ou du titane au lieu de l'aluminium dudit halogénure d'aluminium.

18. Le processus de fabrication de polybutadiène haut 1,4-cis hydroxyle selon la revendication 16, où ledit halogénure organique est halogénure t-alkyle.

19. Le processus de fabrication de polybutadiène haut 1,4-cis hydroxyle selon la revendication 13, où ledit composé d'organoaluminium est un composé exprimé par AIR⁴₃ (où R⁴ est un groupe alkyle et un groupe aryle de 1 à 10 atomes de carbone ou un atome d'hydrogène).

20. Le processus de fabrication de polybutadiène haut 1,4-cis hydroxyle selon la revendication 19, où le composé d'organoaluminium est triméthylaluminium, triéthylaluminium, tripropylaluminium, tributylaluminium, triisobutylaluminium, trihexylaluminium ou hydrure de diisobutylaluminium.

21. Le processus de fabrication de polybutadiène haut 1,4-cis hydroxyle selon l'une quelconque des revendications 1, 6 et 13, où le monomère 1,3-butadiène ou les dérivés de butadiène contiennent un ou plusieurs composés sélectionnés dans le groupe se composant de 1,3-butadiène, isoprène, 1,3-pentadiène, 2,3-diméthyl-1,3-butadiène, myrcène ou des dérivés de ceux-ci.

22. Le processus de fabrication de polybutadiène haut 1,4-cis hydroxyle selon l'une quelconque des revendications 1, 6 et 13, ledit solvant non polaire contenant un ou plusieurs composés sélectionnés dans le groupe se composant de pentane, hexane, isopentane, heptane, octane, isooctane, cyclopentane, méthylcyclopentane, cyclohexane, méthylcyclohexane, éthylcyclohexane, benzène, toluène, éthylbenzène et xylène.
